# EUROPEAN PATENT APPLICATION

(11) **EP 1 867 701 A2**
(43) Date of publication of application: **19.12.2007**
(21) Application number: 07110134.9
(22) Date of filing: 12.06.2007
(51) Int. Cl.: C10G 3/00, C10L 1/02, F02C 6/00, F02G 5/02

(54) **Method for producing electric energy from rewable sources and system that carries out the method**

(30) Priority: 13.06.2006 IT BO20060453
(71) Applicant: Zeus Holding SA, 6901 Lugano (CH)
(72) Inventor: Scisciani, Andrea, 62012 Civitanova Marche (MC) (IT)
(74) Representative: Dall'Olio, Giancarlo

(57) **Abstract**

A method for the production of electric energy from renewable sources, such as vegetable oils and/or animal fats includes: the chemical transformation of at least given quantities of methanol, caustic soda and the vegetable oils and/or animal fats, except wastes, into a liquid fuel by an esterification process; the supply of a turbogas group (2) with the fuel for the production of electric energy; the use of a part of heat produced by the discharge smokes of the turbogas group (2) to heat at least animal fats contained in the first tank S1 above a prefixed temperature.

## Description

The present invention relates to the technical field of the systems supplied with renewable sources and aimed at producing electric energy; in particular, the invention concerns systems, which include one or more esterification reactors for producing of the so-called biodiesel fuel from vegetable oils and/or animal fats as renewable raw materials.

As it is known, the biodiesel is a liquid fuel obtained by esterification from renewable raw materials, such as exactly vegetable oils and animal fats, and it can be substituted by, or blended with, traditional diesel fuel, from which it differs undoubtedly in its low environmental impact, because:
it reduces the net emissions of carbon monoxide (CO) by 50% and of carbon dioxide by 78,45%, thus avoiding contribution to the greenhouse effect;
it does not contain aromatic hydrocarbons and the emissions of the polynuclear aromatic hydrocarbons (benzopyrenes) are reduced by up to 71%;
it does not emit sulfur dioxide (SO₂), since it does not contain sulfur;
it reduces the emission of fine dusts by up to 65%;
it is not classified as a dangerous material, because of its high flash point, and thus it is easy and safe to handle;
it is highly biodegradable and in case of accidental dispersion, it does not pollute soils nor waters;
it has high lubricating capacity and reduces the motor wear.

In the light of the characteristics of this ecological fuel, the object of the present invention is to propose a method for the production of electric energy from renewable sources, which includes the transformation of vegetable oils and/or animal fats by an esterification process and the use of the so obtained biodiesel to supply a turbogas group, aimed at operating an electric generator; in this sense, this object will be pursued also by the re-use of a percentage of heat produced by the group discharge smokes for the cogeneration purposes, for example, for maintaining the animal fat at a temperature, which is suitable for its use.

Another object of the present invention is to propose a method for the production of electric energy from renewable sources, which includes also the separation of the biodiesel mixture, obtained by the esterification process, from possible methanol remnants, so as to supply the turbogas group solely with the pure biodiesel (biodiesel BD100).

A further object of the present invention is to propose a method for the generation of electric energy from renewable sources, whose concept is new, and which is simple and essential, and whose implementation cost is contained with respect to the results to be obtained.

A still further object of the present invention is to propose a method for the production of electric energy from renewable sources, which includes the transformation of vegetable oils and/or animal fats by an esterification process and the use of the so obtained biodiesel to supply a turbogas group, aimed at operating an electric generator; in this sense, this object will be pursued also by the re-use of a percentage of heat produced by the group discharge smokes for the cogeneration purposes, for example, for maintaining the animal fat at a temperature, which is suitable for its use.

Yet further object of the present invention is to propose a system for the production of electric energy from renewable sources, whose structure is efficient and essential, assuring also predetermined reliability standards and whose implementation cost is contained with respect to the results to be obtained.

Another object of the present invention is to propose a system for the production electric energy from renewable sources, which includes also the separation of the biodiesel mixture, obtained by the esterification process, from possible methanol traces, so as to supply the turbogas group solely with the pure biodiesel (biodiesel BD100).

The above mentioned objects are achieved in accordance with the contents of claims.

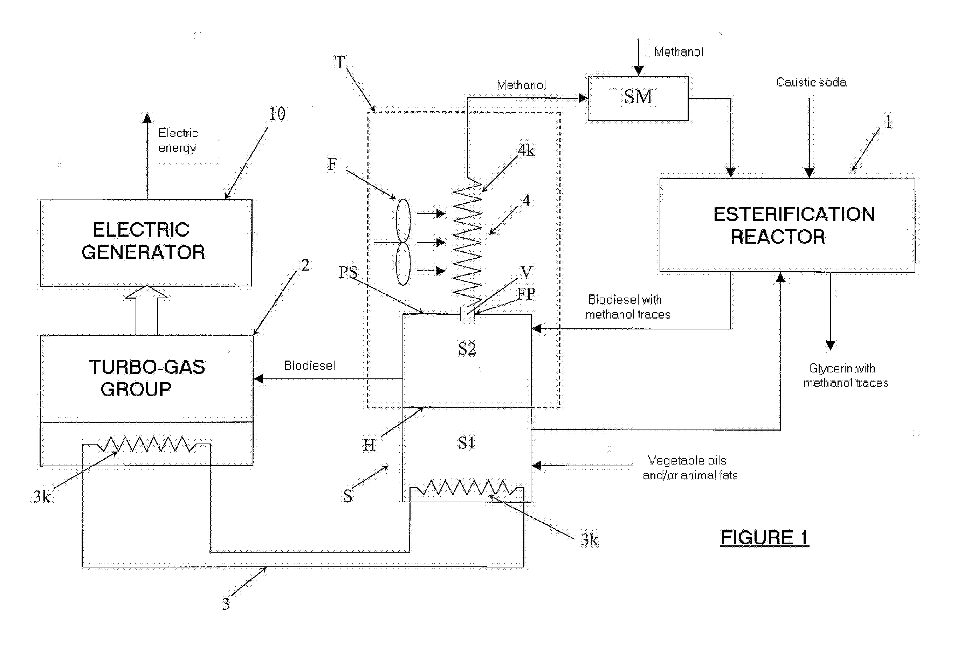

The characteristic features of the invention, not resulting from what has been just said, will be better pointed out in the following, in accordance with what is reported in the claims and with help of the enclosed drawing (see Figure 1), which shows a functional block diagram of the system proposed by the present invention.

Having regards to the enclosed Figure, the reference S1 indicates a first tank for vegetable oils and/or animal fats, as it is known belonging to the so-called renewable sources type, and the reference S2 indicates a second tank, inside which, as it will be pointed out later, a mixture of liquid fuel, obtained by an esterification process, is separated into pure biodiesel (biodiesel BD100), in liquid state, and gaseous methanol.

The first tank S1 and the second tank S2 form one group S, in which the second tank S2 is situated above the first tank S1 and is separated therefrom only by a septum H, for example metallic, for heat conduction; moreover, the second tank S2 has a through hole FP made in its upper wall PS, described later.

The reference numeral 1 indicates an esterification reactor, inside which, as it is known, chemical reactions take place, such as transformation of given percentage quantities of methanol (i.e. methyl alcohol), caustic soda, vegetable oils and/or animal fats into biodiesel and glycerin, both having small percentage remnants of methanol. In particular, the reactor 1 is functionally connected to a tank SM, containing liquid methanol, and to the above mentioned tanks S1, S2.

In this case the reactor receives at inlet liquid methanol from the tank SM, vegetable oils and/or animal fats from the first tank S1, and is supplied by the second tank S2 with the liquid mixture (biodiesel with small percentage of methanol) obtained gradually by the esterification process.

The reference numeral 2 indicates a turbogas group, supplied by the pure biodiesel present inside the second tank S2, obtained by the separation of the above mentioned liquid mixture from methanol, which is converted to gaseous state (as it will be explained later). The group 2 is aimed at operating an electric generator 10 to produce electric energy. The mixture of glycerin and methanol obtained by the esterification can be used in known way for saponification.

The heat produced by the discharge smokes of the turbogas group 2 is partly re-used for the cogeneration.

In particular, the flow of heat is advantageously used for maintaining the vegetable oils and/or animal fats contained in the first tank S1 at a higher temperature than the prefixed threshold, e.g. of fifty degrees centigrade, so that the animal fats are always in liquid state, so as to allow their use for the purposes of the esterification processes in the reactor 1.

Moreover, the transmission of heat through the separation septum H causes also heating of the liquid mixture contained in the second tank S2, with consequent separation thereof from methanol (particularly volatile), which is thus converted to the gaseous state.

The heat produced by the discharge smokes of the turbogas group 2 is carried in known way into the first tank S1 by a carrier fluid (not shown) which flows through a suitable hydraulic circuit 3 and involves a first and a second heat exchanger 3k, see Figure 1.

A third air-gas heat exchanger 4 is aimed at receiving at inlet the gaseous methanol contained in the second tank S2 and sucked by a fan V, situated e.g. in a position corresponding to the through hole FP, supplying at outlet the tank SM with the methanol converted into liquid state.

As a pure example, the third exchanger 4 in Figure 1 is formed by a coil 4k, inside which the methanol flows and which is acted on by a flow of air produced by the fan F.

Obviously, the second tank S2, the fan V and the third heat exchanger 4 define together a distillation tower T, which allows the separation of the liquid methanol, more volatile, from the biodiesel.

The method for the production of electric energy from renewable sources, with the just described system being its application example, includes in continuative way as follows:
■ chemical transformation of given quantities of methyl alcohol, caustic soda and vegetable oils and/or animal fats, with exception of wastes, into a liquid mixture of biodiesel and small percentages of methanol (e.g. up to 2-3%) by an esterification process;
■ the use of a part of heat produced by the discharge smokes of the turbogas group 2 for heating the liquid mixture to a prefixed temperature, so as to obtain the separation of methanol, which is converted into gaseous state, from the same mixture, now composed only of pure biodiesel (biodiesel BD100);
■ the supply of the turbogas group 2 with the pure biodiesel for the production of electric energy;
■ the use of a part of heat produced by the discharge smokes of the turbogas group 2 to heat the vegetable oils and/or animal fats contained in the first tank S1 above a prefixed temperature, e.g. equal to fifty degrees centigrade.

The system proposed by the invention allows advantageously to serve in a wholly autonomous way a number of electricity users and its performance is particularly satisfying also due to the use of the heat produced by the discharge smokes of the turbogas group 2 for cogenerative purposes, in this case for heating vegetable oils and/or animal fats contained in the first tank S1, as well as the liquid mixture of biodiesel and methanol contained in the second tank S2, so as to obtain pure biodiesel for supplying the turbogas group 2.

Another advantage of the present invention lies in the fact that it has conceived a method, and a system capable of carrying it out, for the production of electric energy from renewable sources, which allows:
transformation of vegetable oils and/or animal fats into a liquid fuel mixture by an esterification process;
separation of the so obtained biodiesel mixture from the methanol; and
use of the pure biodiesel for supplying the turbogas group 2, in turn operating the electric generator 10.

Another advantageous technical-functional aspect connected to the just mentioned one is the re-use of the heat produced by the group 2 for cogenerative purpose; in this sense, the reutilization of a part of the heat produced by the combustion makes the proposed system thermally independent, without requiring any addition heat source; obviously, the undoubted advantages deriving from the cogeneration are emphasized in a series of intrinsically connected effects, such as a considerable economic and energetic saving (neither additional units for producing heat energy are necessary nor the use of additional fuel for their supply), a further reduction of the environmental pollution and a bigger conversion efficiency.

Advantageously, the present invention allows to separate the biodiesel mixture, obtained by the esterification process, from the methanol remnants contained therein, in order to supply the turbogas group solely with pure biodiesel (biodiesel BD100).

A further advantage of the present invention derives from the fact that it has conceived a method for the production of electric energy from renewable sources, which is simple and essential, and whose implementation cost is contained with respect to the results to be obtained.

Yet further advantage of the present invention lies in the fact that it has conceived a system for the production of electric energy from renewable sources, whose structure is efficient and essential, assuring also predetermined reliability standards and whose implementation cost is contained with respect to the results to be obtained.

## Claims

1. Method for the production of electric energy from renewable sources, such as vegetable oils and/or animal fats, **characterized in that** it includes in continuative way as follows:
■ chemical transformation of at least predetermined quantities of methanol, caustic soda and said vegetable oils and/or animal fats, with the exception of wastes, into a liquid fuel by an esterification process;
■ supply of at least one turbogas group (2) with said liquid fuel, to operate an electric generator (10);
■ use of at least a part of heat produced by the discharge smokes of the turbogas group (2) to heat at least said vegetable oils and/or animal fats above a prefixed temperature.

2. Method, according to claim 1, **characterized in that** it includes the use of at least a part of said heat produced by the discharge smokes of said turbogas group (2) to heat said liquid fuel to a prefixed temperature, so as to separate said liquid fuel from possible methanol remnants, thus aimed at being converted into gaseous state, so as to allow said turbogas group (2) to be supplied by said liquid fuel, composed only of biodiesel.

3. System for the production of electric energy from renewable sources, such as vegetable oils and/or animal fats, **characterized in that** it includes: a first tank (S1) containing said vegetable oils and/or animal fats; at least one esterification reactor (1), functionally connected to at least said first tank (S1), for the chemical transformation of at least predetermined quantities of methanol, caustic soda and said vegetable oils and/or animal fats, except wastes, into a liquid fuel by an esterification process; at least one turbogas group (2) functionally connected to an electric generator (10), supplied by said liquid fuel obtained by the above mentioned esterification process;a hydraulic circuit (3), including a first and a second heat exchanger (3k), extending inside said first tank (S1) and in correspondence to the discharge smokes of the turbogas group (2), and with a carrier fluid flowing therein, so as to transmit the heat produced by said discharge smokes, to allow at least to heat said vegetable oils and/or animal fats contained in said first tank (S1) above a prefixed temperature.

4. System, according to claim 3, **characterized in that** it includes also a second tank (S2), containing said liquid fuel, functionally interposed between said esterification reactor (1) and said turbogas group (2), so that the second tank (S2) receives in inlet said liquid fuel, leaving said esterification reactor 1, and supplies said turbogas group (2).

5. System, according to claim 4, **characterized in that** said first tank (S1) and said second tank (S2) form one group (S), in which said second tank (S2) is situated above said first tank (S1) and is separated therefrom only by a septum (H) for heat conduction and **in that** it includes also: a through hole (FP) made in the upper wall (PS) of said second tank (S2); and means (V) for sucking the gaseous methanol present in said second tank (S2) through said through hole (FP), to allow the purging of said liquid fuel for supplying said turbogas group (2), from possible methanol traces.

6. System, according to claim 5, **characterized in that** it includes also a third heat exchanger (4), functionally connected to said through hole (FP), and receiving in inlet said gaseous methanol sucked by the suction means (V) and supplying in outlet the same methanol in liquid state, that supplies at least partly said esterification reactor (1).
